# EUROPEAN PATENT APPLICATION

(11) **EP 4 643 652 A1**
(43) Date of publication of application: **05.11.2025**
(21) Application number: 23912072.8
(22) Date of filing: 25.12.2023
(51) Int. Cl.: A23L 2/00, A23L 2/38, B01D 63/02, C02F 1/28, C02F 1/32, C02F 1/44, C02F 1/68

(54) **METHOD FOR PRODUCING MINERAL WATER, AND METHOD FOR SUPPRESSING PROPAGATION OF MICROORGANISMS**

(30) Priority: 28.12.2022 JP 2022212340
(71) Applicant: Suntory Holdings Limited, Osaka-shi, Osaka 530-8203 (JP)
(72) Inventor: OHYA, Takahiro, Kawasaki-shi, Kanagawa 211-0067 (JP); IDO, Yoshihiro, Tokyo 108-8503 (JP); YOKOO, Yoshiaki, Kawasaki-shi, Kanagawa 211-0067 (JP)
(74) Representative: Vossius & Partner Patentanwälte Rechtsanwälte mbB
(86) International application number: PCT/JP2023/046483
(87) International publication number: WO 2024/143293

(57) **Abstract**

The object of the invention is to provide delicious and safe mineral water in a stable manner for prolonged periods, and to inhibit proliferation of microorganisms in a water purification system or product (for example, a packaged drinking water, food or beverage product). Provided is a method for producing mineral water, the method comprising a step of providing a mineral solution, a step of filtering tap water to provide purified water, and a step of mixing the mineral solution with the purified water to a potassium ion concentration of 20 ppm or greater in the mineral water.

## Description

### FIELD

The present invention relates to a method for providing delicious and safe mineral water in a stable manner for prolonged periods, and to a method for inhibiting proliferation of microorganisms in a water purification system or product (for example, a packaged drinking water, food or beverage product).

### BACKGROUND

Efforts are increasingly being focused in recent years on achieving safe and delicious water in light of greater health consciousness and taste preferences, and this has increased demand for installation of water purifiers. At the same time, advances are being made in providing beverages with higher added value by addition of minerals to water.

PTL 1 discloses a method for producing mineral water wherein a mineral component is eluted by immersing a natural ore such as maifan stone, tenju stone or tourmaline in water, but since sustained release concentration of the mineral component is not stable in such conventional methods, it is not possible to provide a stable effect of inhibiting microorganisms for prolonged periods.

Reference 2 discloses a water purification cartridge incorporating antimicrobial activated carbon, but since the antimicrobial substance is solid, the sustained release concentration of the mineral is unstable and the antimicrobial substances of the antimicrobial activated carbon can potentially desorb and contaminate water.

### [CITATION LIST]

### [PATENT LITERATURE]

[PTL 1] Japanese Unexamined Patent Publication No. 2018-102137
[PTL 2] Japanese Unexamined Patent Publication No. 2003-88855

### [NON PATENT LITERATURE]

[NPL 1] Abe, I., Kasseitan no Seizou Houhou, Tanso, Serialized Course, 2006, No. 225, 373-381.

### SUMMARY

### [TECHNICAL PROBLEM]

When an existing cartridge-type water purifier is used, it is connected for prolonged periods (for example, 6 months) after cartridge mounting. Consequently, when the cartridge joints become fouled or the cartridge joints come into contact with the hands during exchange, microorganisms can potentially be drawn into the cartridge and contaminate the purified water. Moreover, since tap water purified with a water purifier has the chlorine in the tap water removed, this has created a problem in that microorganisms are able to proliferate very easily in conventional water purification systems. In addition, since the purified water near the faucet is exposed to external air in a conventional water purification system, it has been necessary to provide a periodic waste water mechanism for periodic discharge of water accumulated near the faucet (for example, once every 48 hours).

It is an object of the present invention to solve this problem by providing delicious and safe mineral water in a stable manner for prolonged periods, and to inhibit proliferation of microorganisms in a water purification system or product (for example, a packaged drinking water, food or beverage product).

### [SOLUTION TO PROBLEM]

The present invention is based on a novel water purification system that can provide a mineral component-containing mineral solution in a first pathway while filtering tap water to provide purified water in a second pathway, and that can provide delicious and safe mineral water with addition of a mineral component in a stable manner for prolonged periods, by mixing the mineral solution and purified water. The present inventors have completed this invention upon finding, surprisingly, that by disinfecting and/or sterilizing a mineral solution before it is mixed with purified water in this type of water purification system, it is possible to provide mineral water without contaminating the purified water at the downstream end, and further that by filling the tubing path of the water purification system with mineral water obtained by adding a mineral solution with a weakly alkaline pH to the purified water, it is possible to inhibit proliferation of microorganisms in water retained inside the water purification system.

Specifically, the main gist of the present invention is as follows.
[1] A method for producing mineral water, the method comprising:
   a step of providing a mineral solution,
   a step of filtering tap water to provide purified water, and
   a step of mixing the mineral solution with the purified water to a potassium ion concentration of 20 ppm or greater in the mineral water.
[2] The method according to [1], wherein the mineral solution has a weakly alkaline pH.
[3] The method according to [1], wherein the mineral solution is filled into a cartridge.
[4] The method according to [1], further comprising a step of disinfecting and/or sterilizing the mineral solution.
[5] The method according to [1], wherein disinfection of the mineral solution is carried out using a hollow fiber membrane.
[6] The method according to [1], wherein sterilization of the mineral solution is carried out by UV irradiation.
[7] The method according to [1], wherein the pH of the mineral solution is 7.5 to 10.5.
[8] The method according to [1], wherein the potassium ion concentration in the mineral solution is 1,000 ppm or greater.
[9] The method according to [1], wherein the mineral solution is prepared by extracting a mineral extract from activated carbon of a plant-derived starting material using an aqueous solvent.
[10] The method according to [1], wherein the plant-derived starting material is selected from among hulls of coconut, palm, almond, walnut or plum; wood materials selected from among sawdust, charcoal, resin and lignin; fly ash; bamboo; food residues selected from among bagasse, rice husk, coffee bean and molasses; and combinations of the foregoing.
[11] The method according to [7], wherein the mineral solution is prepared by further concentrating the mineral extract.
[12] The method according to [1], wherein the mineral water is orally ingestible.
[13] The method according to [1], wherein the mineral water has an extended shelf life.
[14] A method for inhibiting proliferation of microorganisms in a water purification system, the method comprising:
   a step of providing mineral water using the method according to any one of [1] to [13] in the water purification system, and
   a step of filling at least part of the tubing path of the water purification system with the mineral water.
[15] A method for inhibiting proliferation of microorganisms in a product, wherein the method includes using mineral water produced by the method according to any one of [1] to [13] in the product.
[16] The method according to [15], wherein the product is a packaged drinking water, food or beverage product.

### [ADVANTAGEOUS EFFECTS OF INVENTION]

According to the invention it is possible to maintain a bacteriostatic state in a water purification system. It is also possible to obtain a more compact water purification system by using a mineral solution containing a high concentration of minerals. This will facilitate adjustment of the mineral concentration while allowing delicious and safe mineral water to be provided in a stable manner for prolonged periods. It also allows production of mineral water with an extended shelf life.

### DESCRIPTION OF EMBODIMENTS

A first aspect of the invention provides a method for producing mineral water, the method comprising:
a step of providing a mineral solution,
a step of filtering tap water to provide purified water, and
a step of mixing the mineral solution with the purified water to a potassium ion concentration of 20 ppm or greater in the mineral water.

The mineral solution used for the invention is preferably provided by being filled into a container (cartridge) which is either a single-use or replaceable type. The form of the container is not particularly restricted and examples for it include metal containers (cans), resin containers, paper containers (including those with cable tops), PET containers, pouch containers and glass bottles.

Filtration of tap water is carried out to remove residual chlorine, colloidal particles and microorganisms, and depending on the manner of use it generally employs a direct faucet-connected type, standalone type or sink-assembled type (undersink type) structure, typically with a water purifier incorporating a water purification filter such as active carbon or a hollow fiber membrane.

The mineral solution to be used for the invention is diluted by mixing with purified water obtained by filtering tap water, producing mineral water, but when a cartridge filled with the mineral solution is opened and connected to the tubing path of the water purification system, it will typically be connected for prolonged periods after the cartridge is installed. Therefore when the cartridge joints become fouled or when the cartridge joints come into contact with the hands, for example, microorganisms can potentially be drawn into the cartridge and contaminate the purified water, for which reason the mineral solution used for the invention is preferably disinfected and/or sterilized before being mixed with the purified water. The method of the invention may therefore further include a step of disinfecting and/or sterilizing the mineral solution.

Throughout the present specification, the term "microorganisms" is not particularly restricted but refers to bacteria typically growing in water, and especially tap water or purified water, with examples including bacteria belonging to *Bacillus* and *Pseudomonas.*

Disinfection of the mineral solution is preferably carried out using a hollow fiber membrane. The type of hollow fiber membrane is not particularly restricted so long as it can be used in a water purification system, and examples include polyolefin-based, cellulose-based, polyvinyl alcohol-based, polyether-based, poly(methyl methacrylate)-based, polysulfone-based, fluorine resin-based, polyester-based and polyamide-based types. Polyolefin (such as polyethylene or polypropylene)-based hollow fiber membranes are preferred. The hollow fibers used in the hollow fiber membrane may have, for example, an outer diameter of about 20 to about 2000 µm, an opening diameter of about 0.01 to about 1 µm, a porosity of about 20 to about 90% and a membrane thickness of about 5 to about 300 µm.

Sterilization of the mineral solution is preferably carried out by ultraviolet ray (UV) irradiation. The light source for the UV irradiation device may be an ultraviolet light emitting diode (UV-LED), for example, but from the viewpoint of a high sterilizing effect, it is preferred to use a deep UV light emitting diode (DUV-LED) that emits ultraviolet rays with a main peak in the wavelength range of less than about 200 nm to about 300 nm. The flow rate through the UV irradiation device is not particularly restricted so long as it allows sterilization, but it will typically be 4 mL/min or lower, preferably 0.5 mL/min or lower and optimally 0.1 mL/min or lower.

By thus disinfecting and/or sterilizing the mineral solution before mixing with the purified water, it is possible to provide mineral water without contaminating the purified water side (downstream side).

Furthermore, as mentioned above, when tap water has been purified with a conventional water purification system, the chlorine in the tap water is removed resulting in easier proliferation of microorganisms in the purified water, but the present inventors have found, surprisingly, that mineral water obtained by adding the mineral solution used for the invention to purified water has the function of inhibiting proliferation of microorganisms.

The mineral solution used for the invention preferably has a weakly alkaline pH, such a pH typically being 7.5 to 10.5, 7.5 to 10.0, 7.5 to 9.5, 7.5 to 9.0, 7.5 to 8.5, 7.5 to 8.0, 8.0 to 10.5, 8.0 to 10.0, 8.0 to 9.5, 8.0 to 9.0, 8.0 to 8.5, 8.5 to 10.5, 8.5 to 10.0, 8.5 to 9.5, 8.5 to 9.0, 9.0 to 10.5, 9.0 to 10.0, 9.0 to 9.5, 9.5 to 10.5, 9.5 to 10.0 or 10.0 to 10.5.

Since the purpose of the mineral solution used for the invention is to stably provide mineral water by being mixed with purified water to add mineral components to the purified water, the mineral solution preferably contains a high concentration of mineral components. The potassium ion concentration in the mineral solution may be 1,000 ppm or greater, 2,000 ppm or greater, 3,000 ppm or greater, 4,000 ppm or greater, 5,000 ppm or greater, 6,000 ppm or greater, 7,000 ppm or greater, 8,000 ppm or greater, 9,000 ppm or greater, 10,000 ppm or greater, 11,000 ppm or greater, 12,000 ppm or greater, 13,000 ppm or greater, 14,000 ppm or greater, 15,000 ppm or greater, 16,000 ppm or greater, 17,000 ppm or greater, 18,000 ppm or greater, 19,000 ppm or greater, 20,000 ppm or greater, 21,000 ppm or greater, 22,000 ppm or greater, 23,000 ppm or greater, 24,000 ppm or greater, 25,000 ppm or greater, 26,000 ppm or greater, 27,000 ppm or greater, 28,000 ppm or greater, 29,000 ppm or greater, 30,000 ppm or greater, 31,000 ppm or greater, 32,000 ppm or greater, 33,000 ppm or greater, 34,000 ppm or greater, 35,000 ppm or greater, 36,000 ppm or greater, 37,000 ppm or greater, 38,000 ppm or greater, 39,000 ppm or greater, 40,000 ppm or greater, 41,000 ppm or greater, 42,000 ppm or greater, 43,000 ppm or greater, 44,000 ppm or greater, 45,000 ppm or greater, 46,000 ppm or greater, 47,000 ppm or greater, 48,000 ppm or greater, 49,000 ppm or greater, 50,000 ppm or greater, 51,000 ppm or greater, 52,000 ppm or greater, 53,000 ppm or greater, 54,000 ppm or greater, 55,000 ppm or greater, 56,000 ppm or greater, 57,000 ppm or greater, 58,000 ppm or greater, 59,000 ppm or greater, 60,000 ppm or greater, 61,000 ppm or greater, 62,000 ppm or greater, 63,000 ppm or greater, 64,000 ppm or greater, 65,000 ppm or greater, 66,000 ppm or greater, 67,000 ppm or greater, 68,000 ppm or greater, 69,000 ppm or greater, 70,000 ppm or greater, 71,000 ppm or greater, 72,000 ppm or greater, 73,000 ppm or greater, 74,000 ppm or greater, 75,000 ppm or greater, 76,000 ppm or greater, 77,000 ppm or greater, 78,000 ppm or greater, 79,000 ppm or greater, 80,000 ppm or greater, 81,000 ppm or greater, 82,000 ppm or greater, 83,000 ppm or greater, 84,000 ppm or greater, 85,000 ppm or greater, 86,000 ppm or greater, 87,000 ppm or greater, 88,000 ppm or greater, 89,000 ppm or greater, 90,000 ppm or greater, 91,000 ppm or greater, 92,000 ppm or greater, 93,000 ppm or greater, 94,000 ppm or greater, 95,000 ppm or greater, 96,000 ppm or greater, 97,000 ppm or greater, 98,000 ppm or greater, 99,000 ppm or greater, 100,000 ppm or greater, 110,000 ppm or greater, 120,000 ppm or greater, 130,000 ppm or greater, 140,000 ppm or greater, 150,000 ppm or greater, 160,000 ppm or greater, 170,000 ppm or greater, 180,000 ppm or greater, 190,000 ppm or greater or 200,000 ppm or greater, for example.

The mineral solution used for the invention can be prepared, for example, by using an aqueous solvent to obtain a mineral extract from activated carbon of a plant-derived starting material.

Activated carbon is a porous substance comprising mostly carbon but also oxygen, hydrogen and calcium, and because of its large surface area per volume it exhibits adsorption properties for a large number of substances, for which reason it has been widely produced in industry since the beginning of the 20th century. Activated carbon is generally produced by formation of micropores on the nm order (activation) inside a starting carbon material. Methods for producing activated carbon are largely divided into gas activation methods in which a starting material is carbonized and an activating gas such as water vapor or carbon dioxide is subsequently used for activation treatment at high temperature, and chemical activation methods in which a chemical such as zinc chloride or phosphoric acid is added to the starting material before heating in an inert gas atmosphere to simultaneously cause carbonization and activation (NPL 1). Activated carbon according to the invention may be produced by using a plant-derived starting material as the carbon material in either a gas activation method or a chemical activation method. Since the activated carbon of the invention is to be used as an extraction source for mineral components, the activated carbon is preferably not washed with a strong acid such as hydrochloric acid.

Starting materials for the activated carbon are not particularly restricted so long as they are plant-derived starting materials, and examples include fruit hulls (coconut, palm, almond, walnut or plum), wood materials (sawdust, charcoal, resin or lignin), fly ash (carbides of sawdust), bamboo, food residues (bagasse, rice husk, coffee bean or molasses) and waste (pulp mill waste liquids or construction scrap materials), and typically coconut shell, sawdust or bamboo, or a combination thereof, will be selected, with coconut shells being preferred. Coconut shell is the shell part inside coconut or palm fruit.

The form of the activated carbon is not particularly restricted, and examples include powdered activated carbon, granular activated carbon (crushed charcoal, granulated charcoal and molded charcoal), fibrous activated carbon, and specially shaped activated carbon.

The process for obtaining a mineral extract using an aqueous solvent from activated carbon of a plant-derived starting material is carried out by contacting the aqueous solvent with the activated carbon of a plant-derived starting material and eluting out the minerals in the activated carbon of the plant-derived starting material. The process is not particularly restricted so long as the minerals can be eluted out from the activated carbon of a plant-derived starting material, and for example, the activated carbon of a plant-derived starting material may be immersed in the aqueous solvent, or the aqueous solvent may be passed through a column filled with the activated carbon of a plant-derived starting material. While the activated carbon of a plant-derived starting material is immersed in the aqueous solvent, the aqueous solvent may also be stirred to increase the extraction efficiency. The process may further include, after the step of using an aqueous solvent to extract the minerals from the activated carbon of a plant-derived starting material, a step of centrifugal separation of the obtained extract to remove the impurities, and/or a filtering step.

The aqueous solvent used in the step of extracting minerals from the activated carbon of a plant-derived starting material using an aqueous solvent is basically a liquid other than an HCl solution. It will typically be a water solvent, with purified water being especially preferred. Purified water is water of high purity that is free or essentially free of impurities such as salts, residual chlorine, insoluble microparticles, organic materials or non-electrolytic gas. Purified water includes RO water (water passed through a reverse osmosis membrane), deionized water (water with the ions removed by an ion exchange resin) and distilled water (water distilled using a distiller), according to the method of removing the impurities. Since purified water does not contain mineral components it provides no effect of replenishing minerals.

The extraction temperature is not particularly restricted so long as it allows extraction of minerals from the activated carbon of a plant-derived starting material using an aqueous solvent, but the step of extraction of the minerals from the activated carbon of a plant-derived starting material using an aqueous solvent may be carried out at a temperature of 5°C or higher, 10°C or higher, 15°C or higher, 20°C or higher, 25°C or higher, 30°C or higher, 35°C or higher, 40°C or higher, 45°C or higher, 50°C or higher, 55°C or higher, 60°C or higher, 65°C or higher, 70°C or higher, 75°C or higher, 80°C or higher, 85°C or higher, 90°C or higher or 95°C or higher, such as 5 to 95°C, 5 to 90°C, 5 to 85°C, 5 to 80°C, 5 to 75°C, 5 to 70°C, 5 to 65°C, 5 to 60°C, 5 to 55°C, 5 to 50°C, 5 to 45°C, 5 to 40°C, 5 to 35°C, 5 to 30°C, 5 to 25°C, 5 to 20°C, 5 to 15°C, 5 to 10°C, 10 to 95°C, 10 to 90°C, 10 to 85°C, 10 to 80°C, 10 to 75°C, 10 to 70°C, 10 to 65°C, 10 to 60°C, 10 to 55°C, 10 to 50°C, 10 to 45°C, 10 to 40°C, 10 to 35°C, 10 to 30°C, 10 to 25°C, 10 to 20°C, 10 to 15°C, 15 to 95°C, 15 to 90°C, 15 to 85°C, 15 to 80°C, 15 to 75°C, 15 to 70°C, 15 to 65°C, 15 to 60°C, 15 to 55°C, 15 to 50°C, 15 to 45°C, 15 to 40°C, 15 to 35°C, 15 to 30°C, 15 to 25°C, 15 to 20°C, 20 to 95°C, 20 to 90°C, 20 to 85°C, 20 to 80°C, 20 to 75°C, 20 to 70°C, 20 to 65°C, 20 to 60°C, 20 to 55°C, 20 to 50°C, 20 to 45°C, 20 to 40°C, 20 to 35°C, 20 to 30°C, 20 to 25°C, 25 to 95°C, 25 to 90°C, 25 to 85°C, 25 to 80°C, 25 to 75°C, 25 to 70°C, 25 to 65°C, 25 to 60°C, 25 to 55°C, 25 to 50°C, 25 to 45°C, 25 to 40°C, 25 to 35°C, 25 to 30°C, 30 to 95°C, 30 to 90°C, 30 to 85°C, 30 to 80°C, 30 to 75°C, 30 to 70°C, 30 to 65°C, 30 to 60°C, 30 to 55°C, 30 to 50°C, 30 to 45°C, 30 to 40°C, 30 to 35°C, 35 to 95°C, 35 to 90°C, 35 to 85°C, 35 to 80°C, 35 to 75°C, 35 to 70°C, 35 to 65°C, 35 to 60°C, 35 to 55°C, 35 to 50°C, 35 to 45°C, 35 to 40°C, 40 to 95°C, 40 to 90°C, 40 to 85°C, 40 to 80°C, 40 to 75°C, 40 to 70°C, 40 to 65°C, 40 to 60°C, 40 to 55°C, 40 to 50°C, 40 to 45°C, 45 to 95°C, 45 to 90°C, 45 to 85°C, 45 to 80°C, 45 to 75°C, 45 to 70°C, 45 to 65°C, 45 to 60°C, 45 to 55°C, 45 to 50°C, 50 to 95°C, 50 to 90°C, 50 to 85°C, 50 to 80°C, 50 to 75°C, 50 to 70°C, 50 to 65°C, 50 to 60°C, 50 to 55°C, 55 to 95°C, 55 to 90°C, 55 to 85°C, 55 to 80°C, 55 to 75°C, 55 to 70°C, 55 to 65°C, 55 to 60°C, 60 to 95°C, 60 to 90°C, 60 to 85°C, 60 to 80°C, 60 to 75°C, 60 to 70°C, 60 to 65°C, 65 to 95°C, 65 to 90°C, 65 to 85°C, 65 to 80°C, 65 to 75°C, 65 to 70°C, 70 to 95°C, 70 to 90°C, 70 to 85°C, 70 to 80°C, 70 to 75°C, 75 to 95°C, 75 to 90°C, 75 to 85°C, 75 to 80°C, 80 to 95°C, 80 to 90°C, 80 to 85°C, 85 to 95°C, 85 to 90°C or 90 to 95°C.

The extraction time is also not particularly restricted so long as it allows extraction of minerals from the activated carbon of a plant-derived starting material using an aqueous solvent, but the step of extracting minerals from the activated carbon of a plant-derived starting material using an aqueous solvent may be carried out for a time of 5 minutes or longer, 10 minutes or longer, 15 minutes or longer, 20 minutes or longer, 25 minutes or longer, 30 minutes or longer, 35 minutes or longer, 40 minutes or longer, 45 minutes or longer, 50 minutes or longer, 55 minutes or longer, 60 minutes or longer, 65 minutes or longer, 70 minutes or longer, 75 minutes or longer or 80 minutes or longer, such as a time of 5 to 80 minutes, 5 to 75 minutes, 5 to 70 minutes, 5 to 65 minutes, 5 to 60 minutes, 5 to 55 minutes, 5 to 50 minutes, 5 to 45 minutes, 5 to 40 minutes, 5 to 35 minutes, 5 to 30 minutes, 5 to 25 minutes, 5 to 20 minutes, 5 to 15 minutes, 5 to 10 minutes, 10 to 80 minutes, 10 to 75 minutes, 10 to 70 minutes, 10 to 65 minutes, 10 to 60 minutes, 10 to 55 minutes, 10 to 50 minutes, 10 to 45 minutes, 10 to 40 minutes, 10 to 35 minutes, 10 to 30 minutes, 10 to 25 minutes, 10 to 20 minutes, 10 to 15 minutes, 15 to 80 minutes, 15 to 75 minutes, 15 to 70 minutes, 15 to 65 minutes, 15 to 60 minutes, 15 to 55 minutes, 15 to 50 minutes, 15 to 45 minutes, 15 to 40 minutes, 15 to 35 minutes, 15 to 30 minutes, 15 to 25 minutes, 15 to 20 minutes, 20 to 80 minutes, 20 to 75 minutes, 20 to 70 minutes, 20 to 65 minutes, 20 to 60 minutes, 20 to 55 minutes, 20 to 50 minutes, 20 to 45 minutes, 20 to 40 minutes, 20 to 35 minutes, 20 to 30 minutes, 20 to 25 minutes, 25 to 80 minutes, 25 to 75 minutes, 25 to 70 minutes, 25 to 65 minutes, 25 to 60 minutes, 25 to 55 minutes, 25 to 50 minutes, 25 to 45 minutes, 25 to 40 minutes, 25 to 35 minutes, 25 to 30 minutes, 30 to 80 minutes, 30 to 75 minutes, 30 to 70 minutes, 30 to 65 minutes, 30 to 60 minutes, 30 to 55 minutes, 30 to 50 minutes, 30 to 45 minutes, 30 to 40 minutes, 30 to 35 minutes, 35 to 80 minutes, 35 to 75 minutes, 35 to 70 minutes, 35 to 65 minutes, 35 to 60 minutes, 35 to 55 minutes, 35 to 50 minutes, 35 to 45 minutes, 35 to 40 minutes, 40 to 80 minutes, 40 to 75 minutes, 40 to 70 minutes, 40 to 65 minutes, 40 to 60 minutes, 40 to 55 minutes, 40 to 50 minutes, 40 to 45 minutes, 45 to 80 minutes, 45 to 75 minutes, 45 to 70 minutes, 45 to 65 minutes, 45 to 60 minutes, 45 to 55 minutes, 45 to 50 minutes, 50 to 80 minutes, 50 to 75 minutes, 50 to 70 minutes, 50 to 65 minutes, 50 to 60 minutes, 50 to 55 minutes, 55 to 80 minutes, 55 to 75 minutes, 55 to 70 minutes, 55 to 65 minutes, 55 to 60 minutes, 60 to 80 minutes, 60 to 75 minutes, 60 to 70 minutes, 60 to 65 minutes, 65 to 80 minutes, 65 to 75 minutes, 65 to 70 minutes, 70 to 80 minutes, 70 to 75 minutes or 75 to 80 minutes.

The extraction method described above can yield a mineral extract that is mineral-rich, particularly in terms of potassium. Potassium is an essential mineral for the body where it is mostly found inside body cells and interacts with sodium that is primarily present in extracellular fluid, and it plays an important role in maintaining cellular osmotic pressure and retaining intracellular moisture. Potassium, together with sodium, maintains cellular osmotic pressure while also playing a role in maintenance of acid-base equilibrium, transmission of nerve stimulations, regulation of cardiac function and muscle function, and regulation of intracellular enzyme reactions. Potassium is also known to inhibit reabsorption of sodium in the kidneys and promote its excretion into the urine, thereby having a blood pressure-lowering effect.

The mineral extract obtained by the extraction method described above has the advantage of a significantly low content of chloride ion and divalent metal ions. As explained in detail below, chloride ion and divalent metal ions produce an off-flavored taste including bitterness and harshness. The mineral extract obtained by the aforementioned method for producing a mineral extract contains large amounts of potassium which is a very important mineral component for humans, but it has low contents of divalent metal ions and chloride ion which produce such off-flavored taste such as bitterness and harshness. In the mineral extract obtained by this method for producing a mineral extract, extraction of heavy metals (such as lead, cadmium, arsenic or mercury) is inhibited even when they are present in the activated carbon. The mineral extract obtained by the method for producing a mineral extract is therefore highly useful as a starting material for a mineral additive for a drinking water, food or beverage product.

The mineral solution used for the invention may be prepared by further concentrating the aforementioned mineral extract.

The step of concentrating the mineral extract may be carried out by a method known in the field, examples of such methods including boiling concentration, vacuum concentration, freezing concentration, film concentration and ultrasonic atomizing separation. Concentration of the mineral extract can produce a mineral concentrate composition as a mineral concentrate composition comprising desired minerals such as high-concentration potassium, essentially without altering the composition.

After the step of concentrating the mineral extract, the obtained mineral concentrate composition is preferably placed in refrigerated storage or treated by cold filtration. The cooling temperature will typically be adjusted to 0 to 15°C, and preferably 3 to 10°C, 3 to 9°C, 3 to 8°C, 3 to 7°C or 3 to 6°C. The pH of the mineral concentrate composition is preferably adjusted before refrigerated storage or cold filtration. The mineral concentrate composition may be adjusted to have a pH of 7.5 to 10.5, 7.5 to 10.0, 7.5 to 9.5, 7.5 to 9.0, 7.5 to 8.5, 7.5 to 8.0, 8.0 to 10.5, 8.0 to 10.0, 8.0 to 9.5, 8.0 to 9.0, 8.0 to 8.5, 8.5 to 10.5, 8.5 to 10.0, 8.5 to 9.5, 8.5 to 9.0, 9.0 to 10.5, 9.0 to 10.0, 9.0 to 9.5, 9.5 to 10.5, 9.5 to 10.0 or 10.0 to 10.5, for example. Such treatment can increase the transparency and produce a mineral concentrate composition with significantly reduced suspended matter and precipitates.

The mineral solution used for the invention therefore preferably comprises a mineral extract or mineral concentrate composition prepared in this manner.

The mineral solution used for the invention may also contain preservatives in addition to mineral components. Such preservatives are not particularly restricted so long as they can be added to drinking water, foods or beverages, and examples include ethanol, benzoic acid, sodium benzoate, milt-derived protein extract, sorbic acid, potassium sorbate, propionic acid, calcium propionate, sodium propionate and polylysine.

The dilution ratio of the mineral solution is not particularly restricted so long as it is mixed with the purified water for a potassium ion concentration in the mineral water of 20 ppm or greater, and for example, it may be 10 times or greater, 20 times or greater, 30 times or greater, 40 times or greater, 50 times or greater, 60 times or greater, 70 times or greater, 80 times or greater, 90 times or greater, 100 times or greater, 200 times or greater, 300 times or greater, 400 times or greater, 500 times or greater, 600 times or greater, 700 times or greater, 800 times or greater, 900 times or greater, 1,000 times or greater, 2,000 times or greater, 3,000 times or greater, 4,000 times or greater, 5,000 times or greater, 6,000 times or greater, 7,000 times or greater, 8,000 times or greater, 9,000 times or greater or 10,000 times or greater, with respect to the purified water.

The mineral solution used for the invention may be automatically mixed with purified water using a pump, for example, to provide mineral water in a continuous and stable manner.

The mineral water produced by the method of the invention is orally ingestible, and it is preferably intended for drinking.

Potassium is an extremely important mineral component for humans, but excess potassium ion produces an off-flavored taste which is bitter or harsh. When the mineral solution used for the invention is to be mixed with purified water to provide mineral water, therefore, it is preferably prepared with a lower limit for the potassium concentration in the mineral water of 20 ppm or greater, 25 ppm or greater, 30 ppm or greater, 35 ppm or greater, 40 ppm or greater, 45 ppm or greater or 50 ppm or greater, and an upper limit for the potassium ion concentration of 600 ppm or lower, 595 ppm or lower, 590 ppm or lower, 585 ppm or lower, 580 ppm or lower, 575 ppm or lower, 570 ppm or lower, 565 ppm or lower, 560 ppm or lower, 555 ppm or lower, 550 ppm or lower, 545 ppm or lower, 540 ppm or lower, 535 ppm or lower, 530 ppm or lower, 525 ppm or lower, 520 ppm or lower, 515 ppm or lower, 510 ppm or lower, 505 ppm or lower, 500 ppm or lower, 495 ppm or lower, 490 ppm or lower, 485 ppm or lower, 480 ppm or lower, 475 ppm or lower, 470 ppm or lower, 465 ppm or lower, 460 ppm or lower, 455 ppm or lower, 450 ppm or lower, 445 ppm or lower, 440 ppm or lower, 435 ppm or lower, 430 ppm or lower, 425 ppm or lower, 420 ppm or lower, 415 ppm or lower, 410 ppm or lower, 405 ppm or lower, 400 ppm or lower, 395 ppm or lower, 390 ppm or lower, 385 ppm or lower, 380 ppm or lower, 375 ppm or lower, 370 ppm or lower, 365 ppm or lower, 360 ppm or lower, 355 ppm or lower, 350 ppm or lower, 345 ppm or lower, 340 ppm or lower, 335 ppm or lower, 330 ppm or lower, 325 ppm or lower, 320 ppm or lower, 315 ppm or lower, 310 ppm or lower, 305 ppm or lower, 300 ppm or lower, 295 ppm or lower, 290 ppm or lower, 285 ppm or lower, 280 ppm or lower, 275 ppm or lower, 270 ppm or lower, 265 ppm or lower, 260 ppm or lower, 255 ppm or lower, 250 ppm or lower, 245 ppm or lower, 240 ppm or lower, 235 ppm or lower, 230 ppm or lower, 225 ppm or lower, 220 ppm or lower, 215 ppm or lower, 210 ppm or lower, 205 ppm or lower or 200 ppm or lower. When the mineral solution used for the invention is to be mixed with purified water to provide mineral water, it may be prepared to a potassium concentration in the mineral water of, for example, 20 to 200 ppm, 20 to 190 ppm, 20 to 180 ppm, 20 to 170 ppm, 20 to 160 ppm, 20 to 150 ppm, 20 to 140 ppm, 20 to 130 ppm, 20 to 120 ppm, 20 to 110 ppm, 20 to 100 ppm, 20 to 90 ppm, 20 to 80 ppm, 20 to 70 ppm, 20 to 60 ppm, 20 to 50 ppm, 20 to 40 ppm, 20 to 30 ppm, 30 to 200 ppm, 30 to 190 ppm, 30 to 180 ppm, 30 to 170 ppm, 30 to 160 ppm, 30 to 150 ppm, 30 to 140 ppm, 30 to 130 ppm, 30 to 120 ppm, 30 to 110 ppm, 30 to 100 ppm, 30 to 90 ppm, 30 to 80 ppm, 30 to 70 ppm, 30 to 60 ppm, 30 to 50 ppm, 30 to 40 ppm, 40 to 200 ppm, 40 to 190 ppm, 40 to 180 ppm, 40 to 170 ppm, 40 to 160 ppm, 40 to 150 ppm, 40 to 140 ppm, 40 to 130 ppm, 40 to 120 ppm, 40 to 110 ppm, 40 to 100 ppm, 40 to 90 ppm, 40 to 80 ppm, 40 to 70 ppm, 40 to 60 ppm, 40 to 50 ppm, 50 to 200 ppm, 50 to 190 ppm, 50 to 180 ppm, 50 to 170 ppm, 50 to 160 ppm, 50 to 150 ppm, 50 to 140 ppm, 50 to 130 ppm, 50 to 120 ppm, 50 to 110 ppm, 50 to 100 ppm, 50 to 90 ppm, 50 to 80 ppm, 50 to 70 ppm, 50 to 60 ppm, 60 to 200 ppm, 60 to 190 ppm, 60 to 180 ppm, 60 to 170 ppm, 60 to 160 ppm, 60 to 150 ppm, 60 to 140 ppm, 60 to 130 ppm, 60 to 120 ppm, 60 to 110 ppm, 60 to 100 ppm, 60 to 90 ppm, 60 to 80 ppm, 60 to 70 ppm, 70 to 200 ppm, 70 to 190 ppm, 70 to 180 ppm, 70 to 170 ppm, 70 to 160 ppm, 70 to 150 ppm, 70 to 140 ppm, 70 to 130 ppm, 70 to 120 ppm, 70 to 110 ppm, 70 to 100 ppm, 70 to 90 ppm, 70 to 80 ppm, 80 to 200 ppm, 80 to 190 ppm, 80 to 180 ppm, 80 to 170 ppm, 80 to 160 ppm, 80 to 150 ppm, 80 to 140 ppm, 80 to 130 ppm, 80 to 120 ppm, 80 to 110 ppm, 80 to 100 ppm, 80 to 90 ppm, 90 to 200 ppm, 90 to 190 ppm, 90 to 180 ppm, 90 to 170 ppm, 90 to 160 ppm, 90 to 150 ppm, 90 to 140 ppm, 90 to 130 ppm, 90 to 120 ppm, 90 to 110 ppm, 90 to 100 ppm, 100 to 200 ppm, 100 to 190 ppm, 100 to 180 ppm, 100 to 170 ppm, 100 to 160 ppm, 100 to 150 ppm, 100 to 140 ppm, 100 to 130 ppm, 100 to 120 ppm, 100 to 110 ppm, 110 to 200 ppm, 110 to 190 ppm, 110 to 180 ppm, 110 to 170 ppm, 110 to 160 ppm, 110 to 150 ppm, 110 to 140 ppm, 110 to 130 ppm, 110 to 120 ppm, 120 to 200 ppm, 120 to 190 ppm, 120 to 180 ppm, 120 to 170 ppm, 120 to 160 ppm, 120 to 150 ppm, 120 to 140 ppm, 120 to 130 ppm, 130 to 200 ppm, 130 to 190 ppm, 130 to 180 ppm, 130 to 170 ppm, 130 to 160 ppm, 130 to 150 ppm, 130 to 140 ppm, 140 to 200 ppm, 140 to 190 ppm, 140 to 180 ppm, 140 to 170 ppm, 140 to 160 ppm, 140 to 150 ppm, 150 to 200 ppm, 150 to 190 ppm, 150 to 180 ppm, 150 to 170 ppm, 150 to 160 ppm, 160 to 200 ppm, 160 to 190 ppm, 160 to 180 ppm, 160 to 170 ppm, 170 to 200 ppm, 170 to 190 ppm, 170 to 180 ppm, 180 to 200 ppm, 180 to 190 ppm or 190 to 200 ppm.

Naturally occurring water sources contain a fixed amount of chloride ion, with most sources being derived from the ground or seawater. When chloride ion is present at 250 to 400 mg/l or greater, persons with higher taste sensitivity perceive a salty flavor which can potentially impair the taste, and therefore the mineral solution used for the invention is preferably prepared so that the chloride ion content is as low as possible. When the mineral solution used for the invention is to be mixed with purified water to provide mineral water, it is preferably prepared so that the chloride ion content in the mineral water is 50% or lower, 49% or lower, 48% or lower, 47% or lower, 46% or lower, 45% or lower, 44% or lower, 43% or lower, 42% or lower, 41% or lower, 40% or lower, 39% or lower, 38% or lower, 37% or lower, 36% or lower, 35% or lower, 34% or lower, 33% or lower, 32% or lower, 31% or lower, 30% or lower, 29% or lower, 28% or lower, 27% or lower, 26% or lower, 25% or lower, 24% or lower, 23% or lower, 22% or lower, 21% or lower, 20% or lower, 19% or lower, 18% or lower, 17% or lower, 16% or lower, 15% or lower, 14% or lower, 13% or lower, 12% or lower, 11% or lower, 10% or lower, 9% or lower, 8% or lower, 7% or lower, 6% or lower, 5% or lower, 4% or lower, 3% or lower, 2% or lower or 1% or lower, for example, with respect to the potassium concentration. The chloride ion content in the mineral solution used for the invention may be, for example, 50% or lower, 49% or lower, 48% or lower, 47% or lower, 46% or lower, 45% or lower, 44% or lower, 43% or lower, 42% or lower, 41% or lower, 40% or lower, 39% or lower, 38% or lower, 37% or lower, 36% or lower, 35% or lower, 34% or lower, 33% or lower, 32% or lower, 31% or lower, 30% or lower, 29% or lower, 28% or lower, 27% or lower, 26% or lower, 25% or lower, 24% or lower, 23% or lower, 22% or lower, 21% or lower, 20% or lower, 19% or lower, 18% or lower, 17% or lower, 16% or lower, 15% or lower, 14% or lower, 13% or lower, 12% or lower, 11% or lower, 10% or lower, 9% or lower, 8% or lower, 7% or lower, 6% or lower, 5% or lower, 4% or lower, 3% or lower, 2% or lower or 1% or lower, with respect to the potassium concentration.

In the body, calcium, together with phosphorus, forms the skeleton as hydroxyapatite, and is also known to be involved in muscle contraction. Magnesium is known to form bone and teeth in the body, and to participate in enzyme reactions and energy production in the body as well. The calcium ion and magnesium ion contents in water are also known to affect the taste of water, and among the minerals found in water, the index of the total content of calcium and magnesium (hardness) is used to distinguish between soft water at below a specified level, or hard water at above that level. Mineral water produced in Japan is most usually soft water, whereas Europe mostly produces hard water. The WHO criteria, using American hardness (mg/l) as the amount of salts in terms of calcium carbonate, establishes soft water as 0 to 60, hard water as 120 to 180, and very hard water as 180 or above. Water of moderate hardness (10 to 100 mg/l) is generally considered to be "delicious", while a particularly high magnesium content results in stronger bitterness and a less pleasant taste. An excessively high hardness not only affects the taste sensation of water but is also undesirable as it may cause gastrointestinal irritation, potentially leading to diarrhea. Therefore, when the mineral solution used for the invention is to be mixed with purified water to provide mineral water, it is preferably prepared so that the calcium ion content of the mineral water is, for example, 30% or lower, 29% or lower, 28% or lower, 27% or lower, 26% or lower, 25% or lower, 24% or lower, 23% or lower, 22% or lower, 21% or lower, 20% or lower, 19% or lower, 18% or lower, 17% or lower, 16% or lower, 15% or lower, 14% or lower, 13% or lower, 12% or lower, 11% or lower, 10% or lower, 9% or lower, 8% or lower, 7% or lower, 6% or lower, 5% or lower, 4% or lower, 3% or lower, 2% or lower or 1% or lower with respect to the potassium ion concentration, and so that the magnesium ion content of the mineral water is, for example, 15% or lower, 14% or lower, 13% or lower, 12% or lower, 11% or lower, 10% or lower, 9% or lower, 8% or lower, 7% or lower, 6% or lower, 5% or lower, 4% or lower, 3% or lower, 2% or lower or 1% or lower with respect to the potassium ion concentration. The calcium ion content of the mineral solution used for the invention is, for example, 2.0% or lower, 1.9% or lower, 1.8% or lower, 1.7% or lower, 1.6% or lower, 1.5% or lower, 1.4% or lower, 1.3% or lower, 1.2% or lower, 1.1% or lower, 1.0% or lower, 0.9% or lower, 0.8% or lower, 0.7% or lower, 0.6% or lower, 0.5% or lower, 0.4% or lower, 0.3% or lower, 0.2% or lower, 0.1% or lower, 0.09% or lower, 0.08% or lower, 0.07% or lower, 0.06% or lower, 0.05% or lower, 0.04% or lower, 0.03% or lower, 0.02% or lower or 0.01% or lower with respect to the potassium ion concentration. The magnesium ion content of the mineral solution used for the invention is, for example, 1.0% or lower, 0.9% or lower, 0.8% or lower, 0.7% or lower, 0.6% or lower, 0.5% or lower, 0.4% or lower, 0.3% or lower, 0.2% or lower, 0.1% or lower, 0.09% or lower, 0.08% or lower, 0.07% or lower, 0.06% or lower, 0.05% or lower, 0.04% or lower, 0.03% or lower, 0.02% or lower or 0.01% or lower with respect to the potassium ion concentration.

Sodium holds moisture while maintaining extracellular fluid volume and circulating blood volume in the body, and regulating blood pressure. It is known that a minimum amount of sodium ion needs to be ingested for effective replenishment of moisture to the body, and it is therefore particularly effective as a countermeasure against heatstroke. Excessive sodium intake, however, increases liquid volume which can raise blood pressure and lead to swelling. Increasing sodium ion content produces a salty flavor and slimy feel, often impairing the refreshing feel of a beverage. When the mineral solution used for the invention is to be mixed with purified water to provide mineral water, therefore, it is preferably prepared so that the sodium ion concentration of the mineral water is, for example, 10 to 50%, 10 to 45%, 10 to 40%, 10 to 35%, 10 to 30%, 10 to 25%, 10 to 20%, 10 to 15%, 15 to 50%, 15 to 45%, 15 to 40%, 15 to 35%, 15 to 30%, 15 to 25%, 15 to 20%, 20 to 50%, 20 to 45%, 20 to 40%, 20 to 35%, 20 to 30%, 20 to 25%, 25 to 50%, 25 to 45%, 25 to 40%, 25 to 35%, 25 to 30%, 30 to 50%, 30 to 45%, 30 to 40%, 30 to 35%, 35 to 50%, 35 to 45%, 35 to 40%, 40 to 50%, 40 to 45% or 45 to 50% of the potassium ion concentration. The sodium content of the mineral solution may be, for example, 5 to 45%, 5 to 40%, 5 to 35%, 5 to 30%, 5 to 25%, 5 to 20%, 5 to 15%, 5 to 10%, 10 to 45%, 10 to 40%, 10 to 35%, 10 to 30%, 10 to 25%, 10 to 20%, 10 to 15%, 15 to 45%, 15 to 40%, 15 to 35%, 15 to 30%, 15 to 25%, 15 to 20%, 20 to 45%, 20 to 40%, 20 to 35%, 20 to 30%, 20 to 25%, 25 to 50%, 25 to 45%, 25 to 40%, 25 to 35%, 25 to 30%, 30 to 45%, 30 to 40%, 30 to 35%, 35 to 45%, 35 to 40% or 40 to 45%, of the potassium ion concentration.

Mineral water produced by the method of the invention may typically have a pH of 7.5 to 10.5, 7.5 to 10.0, 7.5 to 9.5, 7.5 to 9.0, 7.5 to 8.5, 7.5 to 8.0, 8.0 to 10.5, 8.0 to 10.0, 8.0 to 9.5, 8.0 to 9.0, 8.0 to 8.5, 8.5 to 10.5, 8.5 to 10.0, 8.5 to 9.5, 8.5 to 9.0, 9.0 to 10.5, 9.0 to 10.0, 9.0 to 9.5, 9.5 to 10.5, 9.5 to 10.0 or 10.0 to 10.5. The mineral water produced by the method of the invention also has buffer capacity, and preferably it has significant buffer capacity in the weakly alkaline to weakly acidic pH range. For example, if the buffer capacity is defined as the ratio (B)/(A), where (A) is the liquid volume (mL) required for lowering from pH 9.2 to pH 3.0 in titration with 0.1 M hydrochloric acid against 100 g of sodium hydroxide solution prepared to pH 9.2, and (B) is the liquid volume (mL) required for lowering from pH 9.2 to pH 3.0 in titration of water containing the added mineral solution used for the invention against 0.1 M hydrochloric acid, the water added to the mineral solution used for the invention has a buffer capacity of, for example, 1.5 or greater, 1,6 or greater, 1,7 or greater, 1,8 or greater, 1.9 or greater, 2.0 or greater, 2.1 or greater, 2.2 or greater, 2.3 or greater, 2.4 or greater, 2.5 or greater, 2.6 or greater, 2.7 or greater, 2.8 or greater, 2.9 or greater, 3.0 or greater, 3.5 or greater, 4.0 or greater, 4.5 or greater, 5.0 or greater, 5.5 or greater, 6.0 or greater, 6.5 or greater, 7.0 or greater, 7.5 or greater, 8.0 or greater, 8.5 or greater, 9.0 or greater, 9.5 or greater, 10.0 or greater, 10.5 or greater, 11.0 or greater or 11.5 or greater.

Tap water is mixed with sodium hypochlorite, calcium hypochlorite or liquefied chlorine for sterilization, and in Japan, tap water regulations specify keeping residual chlorine at 0.1 mg or greater (= 3 × 10⁻⁵ mol/l) per liter for household faucets. On the other hand, ammonia nitrogen and hypochlorous acid molecules (HCLO) present in raw tap water react with residual chlorine to form inorganic chloramines (monochloramine, dichloramine and trichloramine), which are the major causes of calcium odor which impairs the flavor of water. Since HCLO in water is ionized to CLO⁻ at pH 7.5 or higher, inorganic chloramine formation is less likely to occur in water that has become weakly alkaline by addition of the mineral-containing composition of the invention, and consequently generation of calcium odor may be reduced. The mineral water produced by the method of the invention having the pH property specified above therefore provides a function of imparting a mellow and less off-flavored taste, while reducing calcium odor. The specified range for the pH is useful for preventing or ameliorating acidification in the body, and for example, it can be useful for preventing acid erosion of teeth caused by intraoral acidification after meals, or for improving gastrointestinal symptoms such as excessive stomach acid or abnormal intestinal fermentation caused by acidification in the gastrointestinal region.

More importantly, since mineral water obtained by adding the mineral solution used for the invention to purified water has a function of inhibiting proliferation of microorganisms, such mineral water can be filled into the tubing path of a water purification system to inhibit proliferation of microorganisms in water that has pooled in the water purification system, and therefore disinfection and/or sterilization of the mineral solution before mixture with the purified water can avoid contamination of the purified water side (downstream side), while the number of microorganisms in the mineral water produced by the method of the invention also remains significantly lower compared to using a conventional water purification system. According to the invention, therefore, it is possible to stably provide delicious and safe mineral water for prolonged periods. The invention also allows production of mineral water with an extended shelf life.

A second aspect of the invention provides a method for inhibiting proliferation of microorganisms in a water purification system, the method comprising:
a step of providing mineral water using the method for producing mineral water described above in a water purification system, and
a step of filling at least part of the tubing path of the water purification system with the mineral water.

In the method for inhibiting proliferation of microorganisms in a water purification system according to the invention, for example, a mineral solution with a weakly alkaline pH which is filled into a cartridge is provided in a first pathway, the mineral solution being disinfected and/or sterilized, and throughput of the mineral solution from the cartridge being controlled by a pump for continuous and stable provision of the mineral solution. In the second pathway, tap water is filtered with a water purifier, for example, to provide purified water. By mixing the mineral solution provided in the first pathway with the purified water provided in the second pathway, and filling at least part of the tubing path of the water purification system (for example, the region from the joining section of the first pathway and second pathway up to the faucet) with the obtained mineral water, it is possible to inhibit proliferation of microorganisms in the water purification system.

Since mineral water obtained by adding the mineral solution used for the invention to purified water thus has a function of inhibiting proliferation of microorganisms, such mineral water can be filled into the tubing path of a water purification system to inhibit proliferation of microorganisms in the water that has pooled in the water purification system, and therefore disinfection and/or sterilization of the mineral solution before mixture with the purified water can avoid contamination of the purified water side (downstream side), while significantly inhibiting proliferation of microorganisms in the water purification system.

A third aspect of the invention provides a method for inhibiting proliferation of microorganisms in a product, wherein the method includes using mineral water produced by the method for producing mineral water described above in the product. This allows production of a product with an extended shelf life.

The product may be a packaged drinking water, food or beverage product, for example. In this case, the mineral water is added to the drinking water, food or beverage before sealing the container. The mineral water and the drinking water, food or beverage are preferably disinfected and/or sterilized before being filled into the container and/or after being filled into the container and sealed. By filling a container with drinking water, food or a beverage with addition of mineral water which has a function of inhibiting proliferation of microorganisms, it is possible to inhibit proliferation of microorganisms in the filled product and significantly lengthen the shelf life of the product.

The present invention will now be explained in greater detail by the following Examples. It is to be understood, however, that the invention is not restricted in any way to the Examples, and various modifications thereof may be implemented.

### [Examples]

### <Example 1: Preparation of mineral extract from coconut shell activated carbon>

After adding 30 g of coconut shell activated carbon ("Taiko CW type", unwashed, product of Futamura Chemical Co., Ltd.) and 400 g of distilled water heated to 90°C into a 1 L Erlenmeyer flask, the mixture was stirred with a stirrer at 100 rpm for 15 minutes while heating at 90°C. The obtained suspension was suction filtered with a polyester 500 mesh (25 µm), and the resulting filtrate was centrifuged at 3000 rpm for 10 minutes. The centrifuged supernatant was suction filtered with filter paper to obtain a mineral extract.

### <Example 2: Comparison of activated carbons>

A mineral extract was prepared by the same method as Example 1, except that the coconut shell activated carbon was changed to KURARAYCOAL^{R} GG (unwashed, Kuraray Co., Ltd.).

### <Examples 3 to 6: Comparison of extraction times>

Mineral extracts were prepared by the same method as Example 1, except that the extraction time was changed to 10, 20, 40 or 80 minutes.

### <Examples 7 to 9: Comparison of distilled water amounts and extraction times>

Mineral extracts were prepared by the same method as Example 1, except that the amount of distilled water was changed to 130, 200 or 400 g, and the extraction time was changed to 5 minutes.

### <Examples 10 to 12: Comparison of extraction temperatures and extraction times>

Mineral extracts were prepared by the same method as Example 1, except that the extraction temperature was changed to 30, 60 or 90°C and the extraction time was changed to 5 minutes.

The mineral extracts prepared in Examples 1 to 12 were analyzed by the following methods.

### <ICP analysis of metals>

ICP emission spectrometer: An iCAP6500Duo (Thermo Fisher Scientific) was used. The ICP General-Purpose Mixture XSTC-622B was diluted and 4 calibration curves were generated for 0, 0.1, 0.5 and 1.0 mg/L. Each sample was diluted with dilute nitric acid to fit in the calibration curve range, and ICP measurement was performed.

### <IC analysis of Cl⁻ and SO₄²⁻>

Ion chromatograph system: An ICS-5000K (Japan Dionex Corp.) was used. The columns used were Dionex Ion Pac AG20 and Dionex Ion Pac AS20. The eluent used was a potassium hydroxide aqueous solution at 5 mmol/L for 0 to 11 min, 13 mmol/L for 13 to 18 min and 45 mmol/L for 20 to 30 min, and elution was performed with a flow rate of 0.25 mL/min. Anion Mixed Standard Solution 1 (containing 7 ion species including 20 mg/L Cl⁻ and 100 mg/L SO₄²⁻ FujiFilm-Wako) was diluted, and 5 calibration curves were generated each for 0, 0.1, 0.2, 0.4 and 1.0 mg/L (Cl⁻) and 0, 0.5, 1.0, 2.0 and 5.0 mg/L (SO₄²⁻). Each sample was diluted to fit in the calibration curve range, and 25 µL was injected for IC measurement.

The results are shown in the following table.

**[Table 1]**

| Mineral concentrations [mg/kg]: Values for minerals indicate quantitative lower limits | | | | | | | | | | | | | | | | | |
|---|---|---|---|---|---|---|---|---|---|---|---|---|---|---|---|---|---|
| Example | Activated carbon | | Extract | Temperature | Stirring | | Concentration | pH | Na | K | Ca | Mg | Zn | Fe | Si | Cl | SO₄²⁻ |
| | Type [g] | | [g] | [°C] | [rpm] [min] | | | | 0.01 | 0.1 | 0.001 | 0.001 | 0.001 | 0.001 | 0.01 | 0.05 | 0.03 |
| 1 | **Taiko CW type** | 30 | 400 | 90 | 100 | 15 | No | 9.46 | 62.59 | 390.7 | 0.454 | 0.175 | 0.000 | 0.066 | 15.59 | 88.87 | 14.97 |
| 2 | **KURARAYCOAL^{R} GG** | 30 | 400 | 90 | 100 | 15 | No | 9.81 | 69.60 | 474.5 | 0.699 | 0.347 | 0.000 | 0.080 | 17.43 | 0.70 | 1.74 |
| 3 | Taiko CW type | 30 | 130 | 90 | 100 | **10** | No | 9.15 | 133.30 | 1008.0 | 0.222 | 0.212 | 0.002 | 0.070 | 44.83 | 106.9 | 8.38 |
| 4 | Taiko CW type | 30 | 130 | 90 | 100 | **20** | No | 9.04 | 138.30 | 1012.0 | 0.189 | 0.181 | 0.002 | 0.079 | 51.42 | 266.6 | 9.01 |
| 5 | Taiko CW type | 30 | 130 | 90 | 100 | **40** | No | 9.09 | 139.20 | 997.0 | 0.293 | 0.201 | 0.001 | 0.106 | 57.74 | 278.4 | 9.34 |
| 6 | Taiko CW type | 30 | 130 | 90 | 100 | **80** | No | 9.29 | 131.80 | 948.0 | 0.223 | 0.314 | 0.003 | 0.133 | 65.90 | 292.2 | 9.23 |
| 7 | Taiko CW type | 30 | **400** | 90 | 100 | 5 | No | 10.61 | 43.18 | 292.0 | 0.524 | 0.678 | 0.015 | 0.247 | 12.62 | 87.1 | 3.59 |
| 8 | Taiko CW type | 30 | **200** | 90 | 100 | 5 | No | 10.43 | 95.90 | 671.4 | 0.976 | 0.520 | 0.015 | 0.213 | 22.69 | 174.2 | 5.35 |
| 9 | Taiko CW type | 30 | **130** | 90 | 100 | 5 | No | 10.32 | 115.6 | 870 0 | 0.908 | 0.675 | 0.021 | 0.343 | 39.42 | 294.1 | 9.34 |
| 10 | Taiko CW type | 30 | 400 | **90** | 100 | 5 | No | 10.52 | 47.12 | 322.0 | 0.499 | 0.606 | 0.009 | 0.335 | 14.82 | 93.9 | 3.54 |
| 11 | Taiko CW type | 30 | 400 | **60** | 100 | 5 | No | 10.56 | 51.30 | 342.2 | 0.528 | 0.232 | 0.023 | 0.111 | 8.02 | 88.2 | 3.28 |
| 12 | Taiko CW type | 30 | 400 | **30** | 100 | 5 | No | 10.12 | 44.92 | 304.0 | 0.559 | 0.165 | 0.008 | 0.054 | 3.57 | 83.2 | 2.96 |

There was no change in the characteristic of significantly high potassium concentration even with different activated carbons, extraction times, extraction amounts relative to activated carbon and extraction temperatures. Although a significant amount of chloride ion was extracted when HCl was used (data not shown), the concentrations of chloride ion were low in all of the Examples. Incidentally, no heavy metals (lead, cadmium, arsenic or mercury) were detected in any of the Examples (data not shown).

### <Example 13: Preparation of concentrate>

After adding 174 g of coconut shell activated carbon ("Taiko CW type", unwashed, product of Futamura Chemical Co., Ltd.) and 753 g of distilled water heated to 30°C into a 1 L Erlenmeyer flask, the mixture was stirred with a stirrer at 100 rpm for 5 minutes while heating at 30°C. The obtained suspension was suction filtered with a polyester 500 mesh (25 µm), and the resulting filtrate was centrifuged at 3000 rpm for 10 minutes. The centrifuged supernatant was suction filtered with filter paper to obtain a mineral extract. This was carried out twice in the same manner. The three obtained mineral extracts were combined and concentrated 62-fold with an evaporator, to obtain the mineral concentrate extracts shown below.

The mineral extract and mineral concentrate extract prepared in Example 13 were diluted 62-fold and analyzed by the method described above. The results are shown in the following table.

**[Table 2]**

| Mineral concentrations [mg/kg]: Values for minerals indicate quantitative lower limits | | | | | | | | | | | | | | | | | |
|---|---|---|---|---|---|---|---|---|---|---|---|---|---|---|---|---|---|
| Example | Activated carbon | | Extract | Temperature | Stirring | | Concentration | pH | Na | K | Ca | Mg | Zn | Fe | Si | Cl | SO₄²⁻ |
| | Type | [g] | [g] | [°C] | [rpm] | [min] | | | 0.01 | 0.1 | 0.001 | 0.001 | 0.001 | 0.001 | 0.01 | 0.05 | 0.03 |
| 13 | Taiko CW type | 521 | 2259 | 30 | 100 | 5 | No | 977 | 129.4 | 958.6 | 0.232 | 0.309 | 0.003 | 0.020 | 7.50 | 245.3 | 7.41 |
| | | | | | | | Yes | 9.76 | 121.0 | 941.6 | 0.237 | 0.323 | 0.005 | 0.020 | 7.05 | 242.2 | 6.92 |

Even under concentrated conditions, there was no change in the characteristic of high potassium concentration or of low sodium and chloride ion concentrations.

### <Example 14: Preparation of mineral concentrate extract from coconut shell activated carbon>

After adding 200 g of coconut shell activated carbon ("Taiko CW type", unwashed, product of Futamura Chemical Co., Ltd.) and 1500 g of distilled water heated to 90°C into a 1 L Erlenmeyer flask, the mixture was stirred with a stirrer at 100 rpm for 15 minutes while heating at 90°C. The obtained suspension was suction filtered with a polyester 500 mesh (25 µm), and the resulting filtrate was centrifuged at 3000 rpm for 10 minutes. The centrifuged supernatant was suction filtered with filter paper to obtain a mineral extract. The obtained mineral extract was concentrated 14-fold with an evaporator, to obtain the mineral concentrate extract shown below.

**[Table 3]**

| Ion concentrations of mineral concentrate extract | |
|---|---|
| Ion component | Concentration (mg/L) |
| Na | 1,650 |
| K | 11,451 |
| Mg | 1 |
| Ca | 2 |
| Fe | 2 |
| Zn | 3 |
| Cl⁻ | 2,442 |
| SO₄²⁻ | 230 |

### <Example 15: Preparation of mineral concentrate extract from coconut shell activated carbon>

### = Pilot scale =

After passing 180 L of purified water through 40 kg of coconut shell activated carbon ("Taiko", unwashed hydrochloric acid, Futamura Chemical Co., Ltd.), the obtained suspension was clarified using a mesh and centrifugal separation to obtain a mineral extract. This was concentrated 92-fold under reduced pressure using a centrifugal thin-film vacuum evaporator, and the obtained concentrate was clarified by centrifugal separation and filter paper. The concentrate was filled into 1 L vinyl pouches and heat treated at 85°C for 30 minutes to obtain mineral concentrated extracts.

### <Example 16: Preparation of mineral concentrate extract from coconut shell activated carbon>

### = Laboratory small scale =

After combining 200 g of coconut shell activated carbon (granular Shirasagi, unwashed hydrochloric acid, Osaka Gas Chemicals Co., Ltd.) and 910 g of distilled water, the mixture was stirred with a stirrer at 100 rpm for 20 minutes while heating at 30°C. The obtained suspension was suction filtered with filter paper (ADVANTEC quantitative filter paper No. 5C, φ55 mm, by Toyo Roshi Co., Ltd.), and the resulting filtrate was further suction filtered with filter paper (Merck Omnipore PTFE Membrane, 5.0 µm, φ47 mm) to obtain a mineral extract. This was repeated several times until a sufficient amount of mineral extract was obtained, and after mixing the entire mineral extract, a rotary evaporator was used for 50-fold concentration under reduced pressure and the resulting concentrate was filtered with filter paper (ADVANTEC 25ASO20AN by Toyo Roshi Co., Ltd., 0.2 µm) to obtain a mineral concentrate extract. Hydrochloric acid was added to the mineral concentrate to adjust the pH to approximately 9.5, and 10 mL of the mixture was dispensed into a vial and stored by refrigeration for 2 days. After subsequent cold filtration with filter paper (ADVANTEC 25ASO20AN by Toyo Roshi Co., Ltd., 0.2 µm), the concentrate was heat treated at 80°C for 30 minutes to obtain a mineral concentrated extract.

### <Example 17: Preparation of mineral concentrate extract from coconut shell activated carbon>

### = Laboratory large scale =

After combining 800 g of coconut shell activated carbon (granular Shirasagi, unwashed hydrochloric acid, Osaka Gas Chemicals Co., Ltd.) and 3660 g of distilled water, the mixture was stirred for 15 minutes while heating at 30°C. The obtained suspension was suction filtered with filter paper (ADVANTEC A080A090C by Toyo Roshi Co., Ltd.) to obtain a mineral extract. This was repeated several times until a sufficient amount of mineral extract was obtained, and after mixing the entire mineral extract, a rotary evaporator was used for 60-fold concentration under reduced pressure and the resulting concentrate was filtered with filter paper (ADVANTEC A080A090C by Toyo Roshi Co., Ltd.) to obtain a mineral concentrate extract. The extract was dispensed at 10 mL into a vial and stored by refrigeration for 2 days. It was then subjected to cold filtration with filter paper (ADVANTEC A080A090C by Toyo Roshi Co., Ltd.). Hydrochloric acid was added to adjust the pH to approximately 9.5, and purified water was used for dilution to adjust the potassium ion concentration to about 100,000 ppm. The mixture was heat treated at 80°C for 30 minutes to obtain a mineral concentrated extract.

### <Example 18: Preparation of mineral concentrate extract from coconut shell activated carbon>

### = Pilot scale =

After placing 360 kg of kinsuu coconut shell activated carbon (granular Shirasagi, unwashed, Osaka Gas Chemicals Co., Ltd.) and 1620 kg of purified water at 35°C in a 2500 L conical tank, the mixture was stirred for 15 minutes and the obtained suspension was clarified using a vibrating sieve, centrifugal separation and filter paper filtration to obtain a mineral extract. After 60-fold concentration under reduced pressure using a centrifugal thin-film vacuum evaporator, the obtained concentrate was filtered with filter paper to obtain a mineral concentrate extract. The extract was filled into a drum and stored by refrigeration for 2 days, and then subjected to cold filtration with filter paper. Hydrochloric acid was added to adjust the pH to approximately 9.5, and purified water was used for dilution to adjust the potassium ion concentration to about 100,000 ppm. The mixture was heat treated at 130°C for 30 seconds to obtain a mineral concentrated extract.

### <Example 19: Evaluation of microorganism growth inhibition>

### (1) Preparation of test bacteria

*Bacillus* bacteria (vegetative cells) and *Pseudomonas aeruginosa* were used as test bacteria in a proliferation test.

Vegetative *Bacillus* bacteria cells were prepared by thawing wild strain frozen bacteria, smearing 100 µl onto standard agar medium and culturing at 35°C for 2 days, and then scraping the cells, centrifuging (4,000 rpm, 10 min), and then washing and concentrating them.

The *Pseudomonas aeruginosa* cells were prepared by loading one BIOBALL (product of bioMerieux) (10⁸ cfu each) into a centrifuge tube injected with 10 ml of sterile physiological saline, and then stirring and dissolving it.

### (2) Preparation of test solution

The mineral concentrated extract of Example 18 was diluted with purified water to a potassium ion concentration of about 71,000 ppm to obtain a mineral solution.

The mineral solution was diluted with purified water (produced using a TK-AS46 Alkaline Ion Water Purifier by Panasonic) to about 40 ppm to obtain mineral water.

### (3) Bacterial proliferation test

Each prepared test solution was dispensed into a 15 ml centrifuge tube in an amount of 10 ml (n = 3). Each of the prepared test cell samples was adjusted to 10⁴ cfu/ml and 100 µl was dropped into a centrifuge tube. The mixture was stirred after dropping and immediately after stirring was sampled and serially diluted with sterile physiological saline, after which 100 µl was smeared onto standard agar medium and incubated at 35°C, and the cell count was measured (time 0). The mixture was stored at a constant temperature of 30°C and/or 15°C and sampled on the 1st day, 2nd day, 3rd day, 4th day, 7th day and 14th day, and 100 µl was smeared onto standard agar medium and incubated at 35°C, with the cell count being measured after 48 hours.

The results of the bacterial proliferation test are shown in the following table.

**[Table 4]**

| Test bacteria | Test water | pH | Temperature | Time zero cfu/ml | After day 1 cfu/ml | After day 2 cfu/ml | After day 3 cfu/ml | After day 4 cfu/ml | After day 7 cfu/ml | After day 14 cfu/ml |
|---|---|---|---|---|---|---|---|---|---|---|
| *Bacillus* bacteria, vegetative cells | Purified water | 7.16 | 30°C | 7,467 | 19,700 | 44,000 | 15,733 | 27,850 | 34,850 | 49,000 |
| | Mineral-in-water K: 40 ppm | 9.45 | | 3,500 | 1,167 | 580 | 1,147 | 253 | 6,233 | 5,300 |
| | | | 15°C | 2,533 | 1,010 | 280 | 213 | 233 | 127 | 70 |
| *Pseudomonas aeruginosa* | Purified water | 7.16 | 30°C | 13,333 | 3,266,667 | 3,666,667 | 4,800,000 | 3,666,667 | 4,133,333 | 1,766,667 |
| | Mineral-in-water K: 40 ppm | 9.45 | | 13,933 | 5,200 | 113,000 | 343,333 | 98,333 | 2,900 | 4,500 |
| | | | 15°C | 9,700 | 143,333 | 4,300 | 1,243 | 2,000 | 62,000 | 476,667 |
| *Bacillus* bacteria, vegetative cells | Mineral extract K: 71,000 ppm | 9.74 | 30°C | 580 | 393 | 170 | 120 | 147 | 93 | 30 |

As shown by these results, each of the test bacterial strains rapidly proliferated with purified water, but with the mineral water, proliferation was significantly inhibited compared to the purified water.

### <Example 20: Evaluating effectiveness of disinfection and sterilization>

### (1) Preparation of test bacterial strains

*Bacillus* vegetative cells and spore solution were used as test bacteria sample in a disinfection test using a hollow fiber membrane and in a sterilization test using UV irradiation.

The vegetative *Bacillus* bacteria cells were prepared by thawing wild strain frozen bacteria, smearing 100 µl onto standard agar medium and culturing at 35°C for 2 days, and then scraping the cells, centrifuging (4,000 rpm, 10 min), and then washing and concentrating them.

The spore solution was prepared by heat treatment of a concentrate obtained from preparing the vegetative cells, using a heat block at 80°C for 10 minutes and subsequent ice-cooling.

### (3) Disinfection test using hollow fiber membrane (Tests 1 and 2)

The prepared vegetative cells and spore solution were each added dropwise into 50 ml of mineral water to prepare a test cell solution. The total amount of test cell solution was passed through a hollow fiber membrane unit (product of NOK) at 20 ml/min. Each passed filtrate was recovered. The filtrate was serially diluted with sterile physiological saline. After smearing 100 µl onto standard agar medium it was incubated at 35°C. The number of colonies (cfu) was counted after 48 hours.

### (4) Sterilization test by UV irradiation (Tests 3, 4, 5, 6, 7 and 8)

The prepared vegetative cells and spore solution were each added dropwise into 50 ml of mineral water to prepare a test cell solution. Using a pump, the test cell solution was passed through a PAQ-03B-450 UV Unit (by Aqua Sense) at different flow rates of 4 mL/min, 0.5 mL/min and 0.1 mL/min. Each liquid passed through the UV unit was recovered. The passed liquid was serially diluted with sterile physiological saline. After smearing 100 µl onto standard agar medium it was incubated at 35°C. The number of colonies (cfu) was counted after 48 hours and after 7 days.

The results of the hollow fiber membrane disinfection test and the UV irradiation sterilization test are shown in the following table.

**[Table 5]**

| Test parameter | | Test No. | Test bacteria | Before treatment cfu/ml | After treatment cfu/ml |
|---|---|---|---|---|---|
| Hollow fiber membrane test | | 1 | Vegetative cells | 7,600,000 | 0 |
| | | 2 | Spore solution | 7,900,000 | 0 |
| Microtube UV irradiation | Small, 0.1 ml/min | 3 | Vegetative cells | 7,600,000 | 10,000 |
| | Medium, 0.5 ml/min | 4 | | | 325,000 |
| | Large, 4.0 ml/min | 5 | | | 500,000 |
| | Small, 0.1 ml/min | 6 | Spore solution | 7,900,000 | 97,000 |
| | Medium, 0.5 ml/min | 7 | | | 1,560,000 |
| | Large, 4.0 ml/min | 8 | | | 1,770,000 |

As shown by these results, disinfection by hollow fiber membrane and sterilization by UV irradiation significantly reduced the cell counts of the vegetative cells and spore solution.

## Claims

1. A method for producing mineral water, the method comprising:
a step of providing a mineral solution,
a step of filtering tap water to provide purified water, and
a step of mixing the mineral solution with the purified water to a potassium ion concentration of 20 ppm or greater in the mineral water.

2. The method according to claim 1, wherein the mineral solution has a weakly alkaline pH.

3. The method according to claim 1, wherein the mineral solution is filled into a cartridge.

4. The method according to claim 1, further comprising a step of disinfecting and/or sterilizing the mineral solution.

5. The method according to claim 1, wherein disinfection of the mineral solution is carried out using a hollow fiber membrane.

6. The method according to claim 1, wherein sterilization of the mineral solution is carried out by UV irradiation.

7. The method according to claim 1, wherein the pH of the mineral solution is 7.5 to 10.5.

8. The method according to claim 1, wherein the potassium ion concentration in the mineral solution is 1,000 ppm or greater.

9. The method according to claim 1, wherein the mineral solution is prepared by extracting a mineral extract from activated carbon of a plant-derived starting material using an aqueous solvent.

10. The method according to claim 1, wherein the plant-derived starting material is selected from among hulls of coconut, palm, almond, walnut or plum; wood materials selected from among sawdust, charcoal, resin and lignin; fly ash; bamboo; food residues selected from among bagasse, rice husk, coffee bean and molasses; and combinations of the foregoing.

11. The method according to claim 7, wherein the mineral solution is prepared by further concentrating the mineral extract.

12. The method according to claim 1, wherein the mineral water is orally ingestible.

13. The method according to claim 1, wherein the mineral water has an extended shelf life.

14. A method for inhibiting proliferation of microorganisms in a water purification system, the method comprising:
a step of providing mineral water using the method according to any one of claims 1 to 13 in the water purification system, and
a step of filling at least part of the tubing path of the water purification system with the mineral water.

15. A method for inhibiting proliferation of microorganisms in a product, wherein the method includes using mineral water produced by the method according to any one of claims 1 to 13 in the product.

16. The method according to claim 15, wherein the product is a packaged drinking water, food or beverage product.
